# EUROPÄISCHE PATENTSCHRIFT

(11) **EP 2 869 961 B1**
(45) Veröffentlichungstag und Bekanntmachung des Hinweises auf die Patenterteilung: **08.05.2019**
(21) Anmeldenummer: 13732141.0
(22) Anmeldetag: 26.06.2013
(51) Int. Cl.: B23K 20/12, B23K 26/28, F01D 5/04, F01D 5/06, F01D 5/34, B22F 5/00

(54) **VERFAHREN ZUM HERSTELLEN EINES BAUTEILS MIT ERWÄRMUNG DER ERSTEN KOMPONENTE UND DES ZWEITEN MATERIALS AUF EINER REAKTIONSTEMPERATUR**
METHOD OF PRODUCING AN ASSEMBLY WITH HEATING OF THE FIRST COMPONENT AND OF THE SECOND MATERIAL TO A REACTION TEMPERATURE
PROCÉDÉ DE FABRICATION D'UNE PIÈCE AVEC CHAUFFAGE DU PREMIER ÉLÉMENT ET DE LA DEUXIÈME MATIÈRE À UNE TEMPÉRATURE DE REACTION

(30) Priorität: 03.07.2012 DE 102012211481
(43) Veröffentlichungstag der Anmeldung: 13.05.2015
(73) Patentinhaber: Robert Bosch GmbH, 70442 Stuttgart (DE)
(72) Erfinder: SCHMID, Johannes, 87509 Immenstadt (DE); REINSCH, Bernd, 71642 Ludwigsburg (DE); BURGHARDT, Andreas, 70176 Stuttgart (DE); RAGER, Jochen, 72406 Bisingen (DE)
(86) Internationale Anmeldenummer: PCT/EP2013/063398
(87) Internationale Veröffentlichungsnummer: WO 2014/005905

(56) Entgegenhaltungen:
- DE-A1- 2 834 222
- JP-A- H06 254 723
- JP-A- 2010 275 878
- US-A1- 2011 229 325

## Beschreibung

### Stand der Technik

Die vorliegende Erfindung bezieht sich auf ein Verfahren zum Herstellen eines Bauteils gemäß dem Oberbegriff des Anspruchs 1 (siehe z.B. JP 2010 275 878 A).

Bei der Herstellung von Abgasturboladern wird das Turbinenrad (TR), das meist aus einer feingegossenen Nickelbasislegierung besteht, an die Stahlwelle gefügt. Dies wird standardmäßig mit Verfahren wie Löten, Schweißen oder Reibschweißen bewerkstelligt.

Die DE 10 2008 062 553 A1 beschreibt einen Rotor eines Abgasturboladers, insbesondere für Kraftfahrzeuge.

### Offenbarung der Erfindung

Vor diesem Hintergrund wird mit der vorliegenden Erfindung ein Verfahren zum Herstellen eines Bauteils, weiterhin eine Vorrichtung, die dieses Verfahren verwendet, ein Läufer für eine Turbine sowie schließlich ein entsprechendes Computerprogrammprodukt gemäß den Hauptansprüchen vorgestellt.

Vorteilhafte Ausgestaltungen ergeben sich aus den jeweiligen Unteransprüchen und der nachfolgenden Beschreibung.

Die Erfindung basiert auf der Erkenntnis, dass während eines Wärmebehandlungsprozesses in einer Aufheizphase ein Lötprozess zwischen zwei Komponenten aus unterschiedlichen Materialien stattfinden kann. In einer anschließenden Wärmebehandlungsphase kann zumindest eines der Materialien durch die Wärme irreversibel verändert werden. Durch den hier vorgestellten Ansatz wird eine Möglichkeit geschaffen, sehr flexibel verschiedene Komponenten mit einer Verbindungstechnik zu verbinden, die auch bei hohen Temperaturen eine sichere Verbindung der zu verbindenden Elemente sicherstellt.

Das Verfahren zum Herstellen eines Bauteils gemäß der Erfindung ist im Anspruch 1 definiert.

Unter einem Herstellen kann ein Verbinden einer ersten Komponente aus einem ersten Material mit einer zweiten Komponente aus einem zweiten Material an einer Fügestelle verstanden werden. Ein erstes Material kann beispielsweise ein schwer schweißbares Material sein. Beispielsweise kann das erste Material ein hochtemperaturbeständiges Material sein. Das erste Material kann ein Sintermaterial mit einer vorgegebenen Sintertemperatur als Prozesstemperatur und/oder einer vorgegebenen Partikelgröße und/oder einer vorgegebenen Packungsdichte vor dem Sintern sein. Beispielsweise kann das erste Material auch ein hoch legiertes Metall oder ein Konglomerat oder einen Verbund verschiedener Werkstoffe sein. Eine zweite Komponente kann beispielsweise ein Einsatz oder ein Zwischenwerkstoff sein. Das zweite Material kann ein Hilfswerkstoff mit vorbestimmten Eigenschaften sein. Das erste Material kann von dem zweiten Material verschieden sein. Der Zwischenwerkstoff bzw. das zweite Material kann besser mit dem ersten Material verbindbar sein, als ein weiteres Material. Eine direkte Materialpaarung aus dem ersten Material und dem weiteren Material kann schwerer verbindbar sein als eine erste Materialpaarung aus dem zweiten Material/Zwischenwerkstoff und dem ersten Material und eine zweite Materialpaarung aus dem zweiten Material/Zwischenwerkstoff und dem weiteren Material. Ein Bereitstellen kann ein Einfügen der zweiten Komponente/des Zwischenwerkstoffs umfassen. Die Aufnahme kann beispielsweise als Ausnehmung ausgebildet sein und im Bereich der Fügestelle angeordnet sein. Die Aufnahme kann im Schritt des Erwärmens waagerecht ausgerichtet sein. Eine Reaktionstemperatur kann beispielsweise eine Aktivierungsenergie für einen Verbindungsprozess zwischen dem ersten Material und dem zweiten Material bereitstellen. Bei Erreichen der Reaktionstemperatur können Diffusionsprozesse zwischen den Materialien einsetzen, die eine unlösbare Verbindung der Materialien ermöglichen können. Das zweite Material kann stoffschlüssig mit dem ersten Material verbunden werden. Das zweite Material kann eine Schmelztemperatur aufweisen, die niedriger als eine Prozesstemperatur des ersten Materials ist, insbesondere wenn das erste Material ein Sintermaterial ist, welches bei der Prozesstemperatur gesintert wird. Das zweite Material kann eine vorbestimmte Viskosität der Schmelze und/oder ein vorbestimmtes Benetzungsverhalten des ersten Materials in schmelzflüssigem Zustand aufweisen.

Das erste Material kann in einem ersten Zustand von zumindest zwei möglichen Zuständen vorliegen, insbesondere wobei der erste Zustand ein ungesinterter Zustand ist. Das erste Material kann ein Sintermaterial sein. Die Eigenschaften können sich ergänzen. Durch Sintern können Materialien verbunden werden, die schwer verbindbar sind. In einem ungesinterten Zustand kann die erste Komponente eine Gestalt eines endgültigen Bauteils aufweisen. Die erste Komponente kann um eine Schwundzugabe größer ausgeführt sein als das endgültige Bauteil. In dem ungesinterten Zustand kann das erste Material Additive aufweisen, die während des Sinterns verflüchtigt werden. In ungesintertem Zustand kann das erste Material porös sein. Auch das zweite Material kann in einem Ausgangszustand vorliegen und im Schritt des Erwärmens eine Veränderung erfahren. Das zweite Material kann mit dem ersten Material verbindbar sein, wenn das erste Material in dem ersten Zustand vorliegt.

Wenn das erste Material in dem zweiten Zustand vorliegt, kann das zweite Material mit dem ersten Material unverbindbar oder schwerer mit dem ersten Material verbindbar sein.

Die erste Komponente und das zweite Material können über die Reaktionstemperatur auf eine Zustandsänderungstemperatur erwärmt werden, wobei das erste Material irreversibel von dem ersten Zustand in einen zweiten Zustand übergeht, insbesondere wobei das erste Material gesintert wird. Eine Zustandsänderungstemperatur kann höher sein, als die Reaktionstemperatur. Die Reaktion des zweiten Materials mit dem ersten Material kann beendet werden, wenn die Zustandsänderungstemperatur erreicht wird. Beispielsweise können sich beim Erreichen der Zustandsänderungstemperatur Poren in dem ersten Material schließen, sodass das zweite Material nicht weiter in das erste Material eindringen kann. Bei Erreichen der Zustandsänderungstemperatur können Partikel des ersten Materials unlösbare Verbindungen untereinander eingehen und Additive aus dem ersten Material ausgetrieben werden.

Die erste Komponente und das zweite Material können unter Verwendung eines vorbestimmten zeitlichen Temperaturverlaufs erwärmt werden. Bei einem vorbestimmten zeitlichen Temperaturverlauf können die erste Komponente und das zweite Material beispielsweise auf der Reaktionstemperatur gehalten werden, bis ein vorbestimmter Anteil des zweiten Materials mit dem ersten Material reagiert hat. Durch eine Verwendung eines vorbestimmten zeitlichen Temperaturverlaufs kann der Verbindungsprozess gesteuert werden.

Gewünschte Eigenschaften der Verbindung können so eingestellt werden.

Die Reaktionstemperatur ist gemäß der Erfindung höher als eine Schmelztemperatur des Zwischenwerkstoffs/zweiten Materials. Alternativ oder ergänzend ist auch gemäß der Erfindung die Reaktionstemperatur niedriger als eine Schmelztemperatur des ersten Materials. Das zweite Material kann schmelzflüssig in das erste Material eindringen, während das erste Material in festem Zustand bleibt. Das erste Material kann seine Gestalt beibehalten, während sich die Gestalt des zweiten Materials ändern kann. Beispielsweise kann ein Teil des zweiten Materials in das erste Material einsickern.

Das Verfahren weist gemäß der Erfindung einen Schritt des Verbindens einer weiteren Komponente aus einem weiteren Material mit dem zweiten Material/Zwischenwerkstoff auf, um die weitere Komponente mit der ersten Komponente zu verbinden, wobei sich das weitere Material von dem ersten Material unterscheidet. Beim Verbinden kann zumindest eine Kontaktstelle zwischen der weiteren Komponente und dem Zwischenwerkstoff bzw. dem zweiten Material auf eine Reaktionstemperatur der zweiten Materialpaarung erwärmt werden.

Die weitere Komponente wird gemäß der Erfindung mit dem zweiten Material/Zwischenwerkstoff verschweißt. Beispielsweise kann die weitere Komponente durch ein Reibschweißen mit dem zweiten Material/Zwischenwerkstoff verbunden werden. Bei einem Schweißprozess können Materialien ohne Zusätze verbunden werden. Beispielsweise bei einem Laserschweißen kann eine Wärmeeinflusszone in der weiteren Komponente und/oder dem zweiten Material klein gehalten werden.

Die erste Komponente kann ein Turbinenrad für einen Läufer sein. Die weitere Komponente kann alternativ oder zusätzlich eine Welle für den Läufer sein. Damit kann ein Läufer hergestellt werden, dessen Turbinenrad aus einem thermisch hoch belastbaren Material hergestellt werden kann, während die Welle aus einem duktilen und/oder schwingungsdämpfenden Material hergestellt werden kann. Durch ein Verfahren zum Verbinden gemäß dem hier vorgestellten Ansatz kann ein Element hergestellt werden, bei dem einzelne Teilelemente solche verschiedenen Eigenschaften aufweisen, die hierdurch vorteilhaft kombiniert werden.

Die Erfindung wird nachstehend anhand der beigefügten Zeichnungen beispielhaft näher erläutert. Es zeigen:
- Die Figuren 1a bis 1c: Darstellungen der Schritte eines Herstellungsprozesses eines Läufers gemäß einem Ausführungsbeispiel der vorliegenden Erfindung;
- Fig. 2: ein Ablaufdiagramm eines Verfahrens zum Verbinden einer ersten Komponente aus einem ersten Material mit einer zweiten Komponente aus einem zweiten Material an einer Fügestelle gemäß einem Ausführungsbeispiel der vorliegenden Erfindung;
- Fig. 3: ein Blockschaltbild einer Vorrichtung zum Verbinden einer ersten Komponente aus einem ersten Material mit einer zweiten Komponente aus einem zweiten Material an einer Fügestelle; und
- Die Figuren 4a bis 4c: Darstellungen der Schritte eines Verfahrens zum Verbinden einer ersten Komponente aus einem ersten Material mit einer zweiten Komponente aus einem zweiten Material an einer Fügestelle gemäß einem Ausführungsbeispiel der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

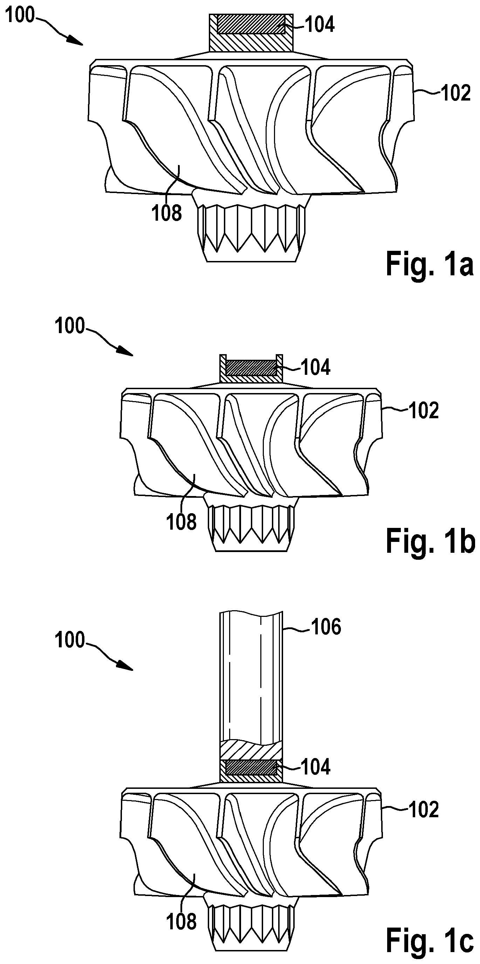

Die Figuren 1a, 1b und 1c zeigen Darstellungen der Schritte eines Herstellungsprozesses eines Läufers 100 gemäß einem Ausführungsbeispiel der vorliegenden Erfindung. Der Läufer 100 weist ein Turbinenrad 102, ein Zwischenmaterial 104 und eine Welle 106 auf. Das Turbinenrad 102 weist mehrere Turbinenschaufeln 108 auf. Die Turbinenschaufeln 108 sind als radial anströmbare Profile ausgebildet, wobei im Betrieb ein radial am Umfang des Turbinenrads 102 eintretender Fluidstrom beim Durchströmen des Turbinenrads 102 seitlich abgelenkt wird, und axial auf einer Austrittseite nahe einer Hauptrotationsachse des Turbinenrads 102 aus dem Turbinenrad 102 austritt. Gegenüber der Austrittseite weist das Turbinenrad 102 eine mittige Ausnehmung auf. Die Ausnehmung ist als Aufnahme dazu ausgebildet, einen Körper aus einem Zwischenwerkstoff 104 aufzunehmen. Der Körper 104 füllt die Ausnehmung vollständig aus. Ein Flächenschwerpunkt einer Schnittfläche durch die Ausnehmung kann mit einem Durchstoßpunkt der Hauptrotationsachse durch die Schnittfläche übereinstimmen, wobei die Schnittfläche senkrecht zu der Hauptrotationsachse ausgerichtet ist. Das Turbinenrad 102 ist in diesem Ausführungsbeispiel als Sinterteil ausgeführt.

Mit anderen Worten ausgedrückt zeigen die Figuren 1a, 1b und 1c einen kombinierten Löt-Schweißprozess zur Anbindung eines Turbinenrades 102 an eine Welle 106. Der hier vorgestellte Ansatz beschreibt einen kombinierten Löt-Schweiß-Prozess, um das Turbinenrad 102 einfach und kostengünstig mit der Welle 106 zu verbinden. Das vorgestellte Verfahren ist besonders vorteilhaft für Turbinenräder 106, die durch Metallpulverspritzgießen hergestellt werden, ist aber nicht auf diese beschränkt.

Um das Schweißen von schwer schweißbaren Werkstoffen zu umgehen, wird im Herstellprozess des Turbinenrads 102 (Sinterprozess bei Metallpulverspritzgießen, Wärmebehandlung bei Feinguss) ein schweißbarer Zwischenwerkstoff 104 an der Verbindungsstelle zur Welle 106 eingebracht. Anschließend wird das Turbinenrad 102 mit herkömmlichen Verfahren (z. B. Laserschweißen, Reibschweißen) mit der Welle 106 verbunden. Das ist besonders vorteilhaft bei hoch beanspruchbaren Hochtemperaturwerkstoffen, wie z. B. Nickelbasislegierungen mit γ-Ausscheidungen oder Titanaluminid-Legierungen, da ein direktes Schweißen dieser Werkstoffe an den Werkstoff der Welle 106 schwierig oder gar unmöglich ist.

In der Fig. 1a ist das Turbinenrad 102 vor einem Sintervorgang als Grünteil dargestellt, d. h. das Turbinenrad 102 weist bereits im Wesentlichen seine endgültige Form auf, das Material des Turbinenrads ist jedoch ungesintert. Ausgangsmaterial des Turbinenrads 102 ist ein Metallpulver, das mittels eines Bindemittels verfestigbar ist. Das Metallpulver wird beispielsweise bei einem Metallpulverspritzgießen zur Formgebung unter Druck in eine Negativform eingebracht und bildet dabei eine Kontur der Negativform ab. In der Negativform erstarrt das Metallpulver mit dem Bindemittel zu der Kontur des Turbinenrads 102. Das Material ist vor dem Sintern größer als nach dem Sintern. In ungesintertem Zustand ist das Material porös. Während des Sinterns beispielsweise in einem Sinterofen schwindet das Material, da das Bindemittel zersetzt wird und die Partikel des Metallpulvers an ihren Berührpunkten Verbindungen aufbauen. Dabei wird auch die Porosität verringert. Die Poren können sich ganz schließen. In gesintertem Zustand weist das Turbinenrad 102 seine Fertigmaße auf. In der Fig. 1a ist das Turbinenrad 102 ungesintert und der Zwischenwerkstoff 106 ist in der Aufnahme angeordnet. Das Turbinenrad 102 ist in einer Sinterungsposition abgebildet. Dabei verläuft die Hauptrotationsachse senkrecht. Die Ausnehmung zeigt nach oben, sodass die Ausnehmung eine Wanne bildet.

Fig. 1b zeigt das Turbinenrad 102 nach dem Sintern. Das Turbinenrad 102 weist jetzt seine Fertigmaße auf. Funktionsflächen mit hohen Toleranzanforderungen, beispielsweise Dichtflächen und/oder Lagersitze können noch nachbearbeitet werden. Während des Sintervorgangs ist der Zwischenwerkstoff 104 in der Ausnehmung geschmolzen. Der schmelzflüssige Zwischenwerkstoff 104 ist in die Poren des Sintermaterials eingedrungen und hat eine Reaktionszone ausgebildet, bevor sich die Poren geschlossen haben. Dadurch ist ein Spiegel des Zwischenwerkstoffs 104 in der Ausnehmung gefallen. Der verbleibende Rest Zwischenwerkstoffs 104 ist unmittelbar fest mit dem Material des Turbinenrads 102 verbunden.

Durch Metallpulverspritzgießen hergestellte Bauteile werden in einem Sinterprozess von porösen Vorkörpern zu dichten Bauteilen verdichtet. Vor der Sinterung kann in eine Aussparung im Turbinenrad 102 ein Werkstoff 104 vorgelegt werden, der knapp unterhalb der Sintertemperatur des Turbinenrads 102 aufschmilzt und eine feste Verbindung mit dem Turbinenrad-Werkstoff eingeht.

Je weiter die Schmelztemperatur des Zwischenwerkstoffes 104 unterhalb der Sintertemperatur des Turbinenrad-Werkstoffs liegt, umso tiefer kann der schmelzflüssige Zwischenwerkstoff 104 in die noch vorhandene Porosität des Turbinenrad-Werkstoffes eindringen, was zu einer besseren Verbindung der beiden Werkstoffe führt. Die Eindringtiefe des Zwischenwerkstoffes 104 hängt nicht nur von dessen Schmelzpunkt, sondern auch von der Viskosität der Schmelze, dem Benetzungsverhalten sowie der Partikelgröße und der Packungsdichte des Turbinenrad-Pulverwerkstoffs ab. Der Zwischenwerkstoff 104 kann somit an jeden Turbinenrad-Werkstoff angepasst werden. Für Turbinenräder 102 aus Nickelbasislegierungen ist ein Zwischenwerkstoff 104 auf Ni-Basis geeignet, dessen Schmelzpunkt durch Zugabe von hauptsächlich Fe, Cr, Zr, Sn, Cu und von Mo, V, Ti und Mn als Nebenbestandteile an die Sintertemperatur des Turbinenrads 102 angepasst werden kann. Für Turbinenräder 102 aus Titanaluminid-Legierungen kann der Zwischenwerkstoff 104 auf Ni-Basis mit Zugaben von Fe, W, Mo, Cr, Ta, Hf, Nb, V oder Ti-Basis mit Zugaben von Ni, V, Mn, Cu, Si, Zr sein. Für Turbinenräder 102 aus Ti-Basis- oder TiAI Legierungen haben sich vanadiumhaltige Werkstoffe als besonders vorteilhaft erwiesen.

Fig. 1c zeigt den Läufer 100 komplett. Die Welle 106 ist mit dem Zwischenmaterial 104 verbunden worden. Dadurch ist die Welle 106 drehfest mit dem Turbinenrad 102 gekoppelt. Die Welle 106 ist in der Hauptrotationsachse des Läufers ausgerichtet und mit dem Zwischenwerkstoff 104 verschweißt.

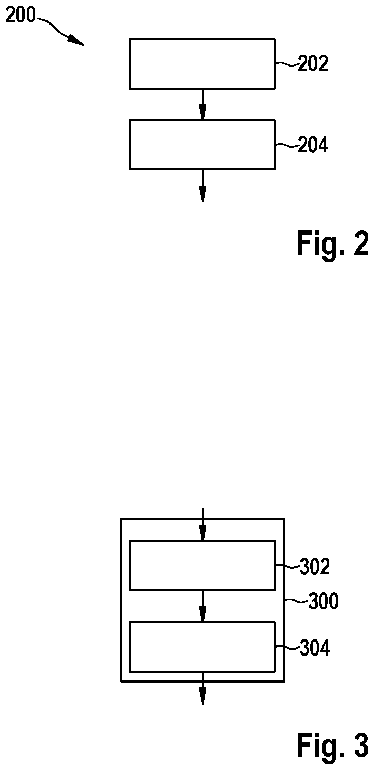

Fig. 2 zeigt ein Ablaufdiagramm eines Verfahrens 200 zum Herstellen eines Bauteils, wie es in Fig. 1 dargestellt ist, gemäß einem Ausführungsbeispiel der vorliegenden Erfindung. Das Verfahren weist einen Schritt 202 des Bereitstellens und einen Schritt 204 des Erwärmens auf. Im Schritt 202 des Bereitstellens wird eine erste Komponente aus einem ersten Material bereitgestellt. In einer Aufnahme der ersten Komponente ist ein zweites Material angeordnet. Im Schritt 204 des Erwärmens werden die erste Komponente und das zweite Material zumindest auf eine Reaktionstemperatur des zweiten Materials erwärmt, um das zweite Material und die erste Komponente zu verbinden. Die erste Komponente und das zweite Material können alternativ auf eine gemeinsame Reaktionstemperatur des ersten Materials sowie des zweiten Materials erwärmt werden.

Fig. 3 zeigt ein Blockschaltbild einer Vorrichtung 300 zum Verbinden einer ersten Komponente aus einem ersten Material mit einer zweiten Komponente aus einem zweiten Material an einer Fügestelle. Die Vorrichtung 300 weist eine Einrichtung zum Bereitstellen 302 und eine Einrichtung zum Erwärmen 304 auf. Die Einrichtung zum Bereitstellen 302 ist dazu ausgebildet, eine erste Komponente aus einem ersten Material bereitzustellen. Die erste Komponente weist eine Aufnahme auf. In der Aufnahme ist eine zweite Komponente aus einem zweiten Material angeordnet. Beispielsweise kann die Einrichtung zum Bereitstellen die erste Komponente mit der zweiten Komponente aus einem Transportbehältnis aufnehmen und in die Einrichtung zum Erwärmen 304 einführen. Ebenso kann die Einrichtung zum Bereitstellen 302 dazu ausgebildet sein, die erste Komponente in einem Urformprozess herzustellen und die zweite Komponente in der Aufnahme anzuordnen. Anschließend kann die Einrichtung zum Bereitstellen 302 die erste Komponente mit der eingesetzten zweiten Komponente in die Einrichtung zum Erwärmen einbringen. Die Einrichtung zum Erwärmen 304 ist dazu ausgebildet, die erste Komponente und die zweite Komponente zumindest auf eine Reaktionstemperatur der zweiten Komponente zu erwärmen. Die Einrichtung zum Erwärmen kann dazu ausgebildet sein, die erste und zweite Komponente auf eine gemeinsame Reaktionstemperatur der ersten und zweiten Komponente zu erwärmen, um die zweite Komponente mit der ersten Komponente zu verbinden.

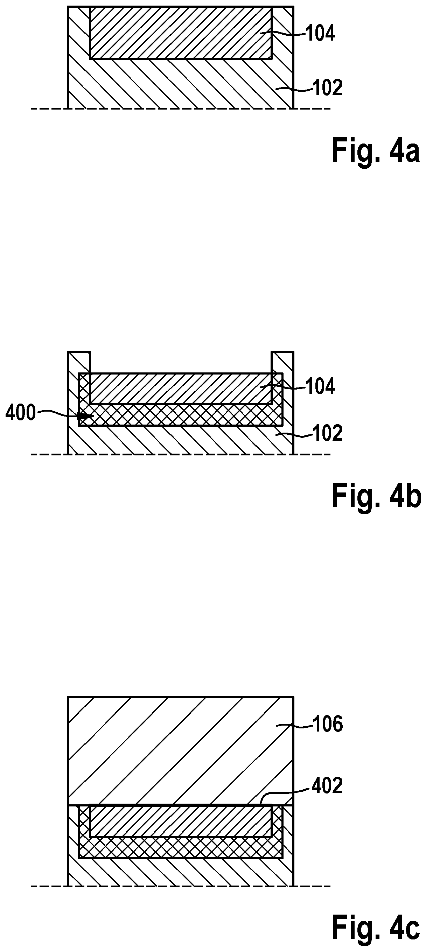

Die Figuren 4a bis 4c zeigen Darstellungen der Schritte eines Verfahrens zum Verbinden einer ersten Komponente 102 aus einem ersten Material mit einer zweiten Komponente 104 aus einem zweiten Material an einer Fügestelle gemäß einem Ausführungsbeispiel der vorliegenden Erfindung. Die Schritte sind an einem Detailausschnitt aus einem größeren Bauteil gezeigt. Die erste Komponente 102 weist eine konkave Aussparung auf, die als Aufnahme für die zweite Komponente 104 ausgebildet ist. Die Aussparung ist nach oben geöffnet dargestellt.

In Fig. 4a ist die zweite Komponente 104 in der Aussparung der ersten Komponente 102 angeordnet und füllt die Aussparung vollständig aus. Ein Rand der Aussparung ist bündig mit einer Oberkante der zweiten Komponente 104. Die erste Komponente ist ungesintert und porös.

In Fig. 4b sind die erste Komponente 102 und die zweite Komponente 104 zumindest bis auf eine Reaktionstemperatur des zweiten Materials erwärmt worden. Anschließend sind die erste Komponente 102 und die zweite Komponente 104 bis auf eine Zustandsänderungstemperatur des ersten Materials erwärmt worden. Bei Erreichen der Reaktionstemperatur ist die zweite Komponente 104 geschmolzen und in die poröse Struktur der ersten Komponente 102 eingedrungen. Dabei hat sich eine Reaktionszone 400 ausgebildet, in der das zweite Material unmittelbar mit dem ersten Material verbunden ist. Bei Erreichen der Zustandsänderungstemperatur hat das erste Material einen zweiten Zustand angenommen. In diesem Ausführungsbeispiel hat der Sintervorgang begonnen und die Poren haben sich geschlossen. Das Eindringen der Schmelze in das erste Material wurde dabei gestoppt. Das erste Material hat bei der Zustandsänderung eine Volumenänderung erfahren.

Hilfsstoffe zur Herstellung des Grünteils sind beim Sintern großteils ausgegast. Das erste Material ist geschwunden. Damit sind Abmessungen der ersten Komponente 102 kleiner geworden. Das zweite Material ist teilweise in dem ersten Material versickert. Dadurch füllt die zweite Komponente die Aussparung nicht mehr vollständig aus. Ränder der Aussparung stehen nach dem Erwärmen über.

In Fig. 4c ist eine weitere Komponente 106 mittels eines stoffschlüssigen Verbindungsverfahrens mit der zweiten Komponente verbunden worden. Die weitere Komponente 106 ist aus einem weiteren Material. Das weitere Material ist mit dem ersten Material der ersten Komponente 102 viel schwerer verbindbar als mit dem zweiten Material der zweiten Komponente 104. In diesem Ausführungsbeispiel ist die weitere Komponente eine Welle 106 für einen Läufer, wie er in Fig. 1 dargestellt ist. Das weitere Material ist ein metallischer Werkstoff, beispielsweise Stahl. Die zweite Komponente ist ein Zwischenwerkstoff 104. Die Welle 106 ist mit dem Zwischenwerkstoff 104 verschweißt worden. An einer Grenzfläche zwischen der Welle 106 und dem Zwischenwerkstoff befindet sich eine Schweißstelle 402. Die erste Komponente ist ein Turbinenrad 102. Das Turbinenrad 102 ist vor dem Verschweißen bearbeitet worden. Die überstehenden Ränder der Aussparung sind abgetragen worden. Die Ränder sind nach dem Bearbeiten in einer Ebene mit der Oberfläche des Zwischenwerkstoffs 104 angeordnet. Beim Bearbeiten kann auch ein Teil des Zwischenmaterials 104 abgetragen worden sein, um eine gewünschte Schichtdicke des Zwischenwerkstoffs zu erhalten. Die Schweißstelle 402 erstreckt sich flächig über die gemeinsame Grenzfläche der Welle 106 und des Zwischenwerkstoffs 104. An einer Grenzfläche zwischen der Welle 106 und dem Turbinenrad 102 ist keine Schweißstelle ausgebildet, da das Sintermaterial des Turbinenrads 102 mit dem Stahl der Welle 106 unter wirtschaftlichen Bedingungen nicht schweißbar ist. Wenn die Welle 106 beispielsweise über ein Reibschweißen mit dem Zwischenwerkstoff 104 verbunden worden ist, dann kann an der Grenzfläche der Welle 106 und des Turbinenrads 102 eine Verzahnung beider Materialien erfolgt sein. Durch eine geeignete Prozesssteuerung kann beim Reibschweißen das Bearbeiten des Turbinenrads 102 entfallen, da das überstehende Material in den hier nicht dargestellten Schweißwulst verdrängt werden kann.

Ein Eindringen des Zwischenwerkstoffs 104 in die Poren des Turbinenrad-Werkstoffs ist vorteilhaft, aber nicht zwingend. Ein zu tiefes Eindringen der Schmelze kann zu einer Schwindungsbehinderung des Turbinenrad-Werkstoffs beim Sintern und somit zu maßlichen Abweichungen des Turbinenrads 102 nach dem Sintern führen.

Das Eindringen lässt sich mit metallografischen Methoden und chemischen Analysen (SEM-EDX) gut überprüfen.

Der hier vorgestellte Ansatz kann auch bei feingegossenen Turbinenrädern 102 zum Einsatz kommen. Hier kann der Prozess gegebenenfalls mit der Wärmebehandlung des Turbinenrads 102 kombiniert werden. Die Schmelztemperatur des Zwischenwerkstoffes 104 kann entsprechend angepasst werden. Zu einem Eindringen der Schmelze in den Turbinenrad-Werkstoff kommt es in diesem Fall nicht.

Nach dem hier vorgestellten Prozess kann der Zwischenwerkstoff 104 im Anbindungsbereich des Turbinenrads 102 mit herkömmlichen Schweißmethoden mit der Welle 106 verbunden werden.

Der hier vorgestellte Ansatz kann überall dort eingesetzt werden, wo ein Turbinenrad 106 mit einer Welle verbunden werden soll, z. B. im Abgasturbolader, bei Durchflussmessern, bei Triebwerken oder in Drehmomentwandlern.

Die beschriebenen und in den Figuren gezeigten Ausführungsbeispiele sind nur beispielhaft gewählt.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (200) zum Herstellen eines Bauteils (100), wobei das Verfahren (200) die folgenden Schritte aufweist:
Bereitstellen (202) einer ersten Komponente (102) aus einem ersten Material, wobei ein zweites Material (104) in einer Aufnahme der ersten Komponente (102) angeordnet ist;
Erwärmen (204) der ersten Komponente (102) und des zweiten Materials (104) zumindest auf eine Reaktionstemperatur des zweiten Materials (104) und/oder des ersten Materials, um das zweite Material (104) und die erste Komponente (102) zu verbinden;
**gekennzeichnet durch** folgende Schritte:
Verbinden einer weiteren Komponente (106) aus einem weiteren Material mit dem zweiten Material (104), um die weitere Komponente (106) mit der ersten Komponente (102) zu verbinden, wobei sich das weitere Material von dem ersten Material unterscheidet, wobei die weitere Komponente (106) mit dem zweiten Material (104) verschweißt wird,
wobei im Schritt des Erwärmens (204) die Reaktionstemperatur höher als eine Schmelztemperatur des zweiten Materials (104) ist und/oder die Reaktionstemperatur niedriger als eine Schmelztemperatur des ersten Materials ist.

2. Verfahren (200) gemäß Anspruch 1, bei dem im Schritt des Bereitstellens (202) das erste Material in einem ersten Zustand von zumindest zwei möglichen Zuständen vorliegt, insbesondere wobei der erste Zustand ein ungesinterter Zustand ist.

3. Verfahren (200) gemäß Anspruch 2, bei dem im Schritt des Erwärmens (204) die erste Komponente (102) und das zweite Material (104) über die Reaktionstemperatur auf eine Zustandsänderungstemperatur erwärmt werden, wobei das erste Material irreversibel von dem ersten Zustand in einen zweiten Zustand übergeht, insbesondere wobei das erste Material gesintert wird.

4. Verfahren (200) gemäß einem der vorangegangenen Ansprüche, bei dem im Schritt des Erwärmens (204) die erste Komponente (102) und das zweite Material (104) unter Verwendung eines vorbestimmten zeitlichen Temperaturverlaufs erwärmt werden.

5. Verfahren (200) gemäß einem der vorangegangenen Ansprüche, bei dem im Schritt des Bereitstellens (202) die erste Komponente (102) ein Turbinenrad für einen Läufer (100) und/oder die weitere Komponente (106) eine Welle für den Läufer (100) ist.

## Claims

1. Method (200) for producing a component (100), wherein the method (200) has the following steps of:
providing (202) a first component (102) made of a first material, wherein a second material (104) is arranged in a receptacle of the first component (102) ;
heating (204) the first component (102) and the second material (104) at least to a reaction temperature of the second material (104) and/or of the first material, in order to join the second material (104) and the first component (102);
**characterized by** the following steps of:
joining a further component (106) made of a further material to the second material (104) in order to join the further component (106) to the first component (102), wherein the further material differs from the first material, wherein the further component (106) is welded to the second material (104),
wherein, in the heating step (204), the reaction temperature is higher than a melting temperature of the second material (104) and/or the reaction temperature is lower than a melting temperature of the first material.

2. Method (200) according to Claim 1, wherein, in the providing step (202), the first material is in a first of at least two possible states, in particular wherein the first state is an unsintered state.

3. Method (200) according to Claim 2, wherein, in the heating step (204), the first component (102) and the second material (104) are heated above the reaction temperature to a change-of-state temperature, wherein the first material passes irreversibly from the first state into a second state, in particular wherein the first material is sintered.

4. Method (200) according to one of the preceding claims, wherein, in the heating step (204), the first component (102) and the second material (104) are heated using a predetermined temporal temperature profile.

5. Method (200) according to one of the preceding claims, wherein, in the providing step (202), the first component (102) is a turbine wheel for a rotor (100) and/or the further component (106) is a shaft for the rotor (100).

## Revendications

1. Procédé(200) de fabrication d'un élément de construction (100), le procédé (200) comprenant les étapes suivantes :
fournir (202) un premier composant (102) en un premier matériau, un deuxième matériau (104) étant disposé dans un réceptacle du premier composant (102) ;
chauffer (204) le premier composant (102) et le deuxième matériau (104) à au moins une température de réaction du deuxième matériau (104) et/ou du premier matériau pour lier le deuxième matériau (104) et le premier composant (102) ;
**caractérisé par** les étapes suivantes :
lier un autre composant (106) en un autre matériau au deuxième matériau (104) pour lier l'autre composant (106) au premier composant (102), l'autre matériau étant différent du premier matériau, l'autre composant (106) étant soudé au deuxième matériau (104),
dans l'étape de chauffage (204) la température de réaction étant supérieure à la température de fusion du deuxième matériau (104) et/ou la température de réaction étant inférieure à la température de fusion du premier matériau.

2. Procédé (200) selon la revendication 1, à l'étape de fourniture (202) le premier matériau étant dans un premier état parmi au moins deux états possibles, en particulier le premier état étant un état non fritté.

3. Procédé (200) selon la revendication 2, à l'étape de chauffage (204) le premier composant (102) et le deuxième matériau (104) étant chauffés au-dessus de la température de réaction jusqu'à une température de changement d'état, le premier matériau passant de manière irréversible du premier état dans un deuxième état, en particulier le premier matériau étant fritté.

4. Procédé (200) selon l'une des revendications précédentes, à l'étape de chauffage (204) le premier composant (102) et le deuxième matériau (104) étant chauffés à l'aide d'un profil de température prédéterminé variant dans le temps.

5. Procédé (200) selon l'une quelconque des revendications précédentes, à l'étape de fourniture (202) le premier composant (102) comprenant une roue de turbine destinée à un rotor (100) et/ou l'autre composant (106) étant un arbre destiné au rotor (100).
